Europäisches Patentamt

European Patent Office

Office européen des brevets

(11) Publication number: **0 178 155**
A2

# EUROPEAN PATENT APPLICATION

(21) Application number: **85307191.8**

(22) Date of filing: **08.10.85**

(51) Int. Cl.⁴: **C 04 B 35/66, C 04 B 35/44**

(30) Priority: **09.10.84 US 659154**

(43) Date of publication of application: **16.04.86**
**Bulletin 86/16**

(84) Designated Contracting States: **AT BE CH DE FR GB IT LI LU NL SE**

(71) Applicant: **THE DOW CHEMICAL COMPANY, 2030 Dow Center Abbott Road P.O. Box 1967, Midland, MI 48640 (US)**

(72) Inventor: **Cisar, Alan James, 2546 Coopers Post Lane, Sugar Land Texas 77478 (US)**
Inventor: **Henslee, Walter Warren, 119 Huckleberry, Lake Jackson Texas 77566 (US)**

(74) Representative: **Raynor, John et al, W.H. Beck, Greener & Co 7 Stone Buildings Lincoln's Inn, London WC2A 3SZ (GB)**

(54) Corrosion resistant refractory coating.

(57) A coating composition, which can be produced from (1) a reactive $MgAl_2O_4$ spinel, (2) optionally, non-reactive fillers, (3) aluminum acid phosphate moieties and/or phosphoric acid, (4) water, and (5) optionally, modifiers, is disclosed.

ACTORUM AG

## CORROSION RESISTANT REFRACTORY COATING

The present invention concerns a spinel composition useful particularly as a spray coating for metal or ceramic surfaces.

The following patents and literature references represent some aspects of the general field of $MgAl_2O_4$ spinels used in mortars, castables and coatings and the like employing phosphorous acids as a reactive component. U.S. Patent 3,730,744, discloses aggregate cast shapes employing $Al(H_2PO_4)_3$ as the bonding solution which contains alkalizing ions as the curing agents. U.S. Patent 3,285,758 teaches ammonium phosphate in combination with aluminum phosphate plus MgO (from calcined dolomite) where spinel is mentioned as an aggregate. U.S. Patent 4,459,156 discloses compositions containing calcined magnesium aluminum spinels and soluble phosphate in an aqueous medium.

A fundamental review of phosphate bonding is found in J. AMER. CERAMIC SOCIETY, Vol. 133, No. 8, August 1, 1950 by William David Kingery. Another review is found in Ceramic Bulletin, Vol. 56, No. 7, page 640 by J.E. Cassidy (1977). Other studies are as follows: Ceramic Bulletin, Vol 59, No. 7 (1980) by Francisco J. Gonzales and John W. Halloran, "Reaction of Orthophosphoric Acid with Several Forms of Aluminum Oxide" and an abstract of a Russian Scientific paper authored by L. B. Khoroshavin, V. A. Ryabin, I. E. Sipeiko, V. N. Naumov, G. A. Sychev, V. Ya. Pavlov, V. M. Chyrin, N. F. Serenko, B. V. Ponomarev, and E. P. Kosolapova, Eastern Institute of Refractories, Ural Scientific-Research Institute of Chemistry, Perm Chemical Plant, All-Union Scientific-Research Institute for the Power Supply in Nonferrous Metallurgy, from Ogneupory, No. 3, pp. 34-36, March, 1977 (translated).

The two review articles, the one by Kingery (covering the art to 1949) and the other by Cassidy (from 1949-1977) form a very complete picture of the state of technology on phosphate bonding. Materials listed as forming phosphate bonds with phosphoric acid are: $TiO_2$, $CaO$, $FeO$, $Fe_2O_3$, $NiO$, $ZnO$, $ZrO_2$, $MgO$, $Al_2O_3$, and $CrO_3$. These may be reacted as pure compounds or as constituents in mineral compositions, i.e., asbestos, bauxite or clay. The most common bonding mechanism using phosphoric acid is the reaction with alumina to form $Al(H_2PO_4)_3$, which is also the starting material in many formulations in place of $H_3PO_4$. $Al(H_2PO_4)_3$ further reacts with either alumina, clay or bauxite, resulting in orthophosphates ($MgHPO_4 \cdot 3H_2O$ or $AlH_3(PO_4)_2$) as the bond.

In the $H_3PO_4$ + $Al_2O_3$ system addition of $Mg^{+2}$, $Fe^{+3}$ or $Be^{+2}$ ions increase bonding strength but these ions also contribute to "premature" setting.

The patent literature very closely follows the above literature review; that is, while it teaches phosphate bonded systems, it only mentions spinel as one possible aggregate material. Also these aggregates are not "reactive" with any activity absorbed due to free MgO and are typically part of the coarse grained portion with very few fines (material <325 mesh).

In accordance with the present invention, effective coating compositions can be produced for application by spray, brush, roller or other means to metal or ceramic surfaces to protect such surfaces from corrosive or abrasive attack. Because this coating adheres strongly to solid surfaces and resists wetting by molten metals, it makes an excellent coating for surfaces used in contact with non-ferrous metals.

The ingredients for producing the various compositions are (1) a reactive $MgAl_2O_4$ spinel (2) optionally, non-reactive fillers, (3) an active phosphate material, preferably comprising aluminum acid phosphate moieties and/or phosphoric acid, (4) water, and (5), optionally, modifiers.

The compositions of the present invention employing non-hydroxide reactive components and fillers in combination with phosphoric acid with or without aluminum dihydrogen phosphate are unique in that the composition produces a strong coating yet has a long consistent shelf life up to 60 plus days.

The coating composition in accordance with at least the preferred aspects of the present invention is usable in, particularly, the metals industry for protection and repair of refractory linings and component parts, for example, in melting furnaces, electrolytic metal winning cells, component parts for ferrous or non-ferrous metal casting machines, including gates, transfer pipes and troughs, nozzles and the like, as well as refractory linings and linings in the chemical and petrochemical industry.

The present invention concerns a coating composition comprising:

(1) 15 to 64 percent by weight of a $MgAl_2O_4$ spinel, calcined to a temperature between about 500°C and 1650°C;

(2) preferably, 0 to 30 percent by weight of a substantially non-reactive filler;

(3) 8 to 42 percent by weight of an acidic phosphate material capable of decomposition on heating to provide $(PO_3)_n^-$ moieties;

(4) 28 to 52 percent by weight of water; and

(5) preferably, 0 to 5 percent by weight of modifiers.

The spinel (component 1) is usually prepared by the process of U.S. Patent No. 4,400,431.

The filler (component 2) when present, may be tabular alumina, fused grain alumina, fused grain spinel, ($MgAl_2O_4$), highly sintered spinel as well as other fused grain materials such as $ZrSiO_4$.

The phosphate material (component 3) is preferably an inorganic phosphorous compound, such as $(H_2PO_4)_3$ or $H_3PO_4$, which is capable of forming $(PO_3)_n^-$ moieties on heating, including drying out of the formulation, usually above about 200 °C.

Water in (component 4) is employed as necessary to give flowability to the binder composition. As are, preferably handling agents (component 5). Total water content usually employed is from about 28 to about 52 weight percent of the total composition.

Modifiers (component 5) when present, include handling and set modifiers as well as colorants and the like. Handling and set modifiers include activated alumina, fumed alumina ($Al_2O_3$), glycerine, polyvinyl alcohol, MgO, $Mg(OH)_2$ or mixtures of two or more, employed in from 0 to about 5 weight percent of the total composition. Other well known handling and set modifiers may be employed. It is to be understood that included within the definition of modifiers are the inorganic coloring agents.

Depending upon the ultimate use of the composition, various fillers, fibers, aggregates and the like may be added to give compression strength, reduce density and/or improve bond strength, and insulating properties as obtained by incorporating these materials in conventional coatings.

Formulations containing the aforedescribed components are hereafter set forth in tabular form to illustrate the variety of mixtures of those components within the scope of the present invention which produce excellent coatings for ceramic and metallic bodies which are to be put into severe corrosive and/or temperature service.

The following table illustrates the preferred operable ranges of general components falling within the present invention:

32,931-F                    -5-

32,931-F

| | MgAl$_2$O$_4$ | | | | Filler | | | | | Modifiers |
| | 1650°[a] | 1500°[a] | 1000°[a] | 500°[a] | fused Al$_2$O$_3$ | sintered Al$_2$O$_3$ | Al(H$_2$PO$_4$)$_3$ | H$_3$PO$_4$ | H$_2$O | fumed Al$_2$O$_3$ |
|---|---|---|---|---|---|---|---|---|---|---|
| Ex. 1 | -- | 28.1 | -- | 2.2 | 27.6 | -- | 12.6 | -- | 29.6 | -- |
| Ex. 1a | -- | 27.7 | -- | 2.2 | 27.2 | -- | 12.4 | -- | 29.2 | 1.3 |
| Ex. 2 | 33.1 | -- | -- | -- | 11.3 | 11.3 | 9.5 | 0.9 | 33.9 | -- |
| Ex. 3 | 33.2 | -- | 10.5 | -- | -- | -- | 17.8 | 0.8 | 37.6 | -- |
| Ex. 4 | 32.5 | -- | 10.3 | -- | -- | -- | 17.5 | 0.8 | 36.8 | 2.2 |
| Ex. 5 | -- | -- | 24.4 | -- | -- | -- | 35.6 | 1.7 | 38.3 | -- |
| Ex. 6 | 34.1 | -- | 10.6 | -- | -- | -- | 9.8 | 0.53 | 43.9 | 1.1 |

[a]firing temperature of the spinel

In the following examples, unless otherwise denoted, the reactive $MgAl_2O_4$ spinel is derived from a coprecipitation process in which a mixture of magnesium aluminum hydroxides ($Mg_xAl_y(OH)_z$) and aluminum hydroxides and/or aluminum oxyhydroxides are produced which are then heated to between about 500°C and 1650°C to convert the hydroxides to their oxides form. The magnesium aluminum hydroxide phase represented above may contain other anions partially substituting for hydroxide (e.g. $Cl^-$, $NO_3^-$, $SO_4^=$, $CO_3^=$), the presence and amount of which will be determined by the type of reactant salts used in the coprecipitation and the type and duration of subsequent treatments, chemical or thermal, to which the precipitate phase has been subjected. The coprecipitate of magnesium/aluminum and aluminum hydroxy compounds is referred to as spinel precursor. The overall Al/Mg ratio with this mixture will be very nearly 2.0, unless otherwise noted. If this ratio significantly deviates from 2.0 (e.g. <1.90 or >2.10) segregated MgO and/or $Al_2O_3$ phases are normally observed in the calcined or sintered product and these can affect reactivity.

The $Al(H_2PO_4)_3$, $H_3PO_4$, fused grain $Al_2O_3$, fumed alumina, and tabular alumina are all commercially available, substantially pure compounds and/or solutions. The sintered spinels may be commercially available fused grain material or a highly sintered, above 1650°C spinel prepared in accordance with U.S. Patent 4,400,431.

Formulations may consist of two main parts, the binder phase, produced by reacting an acidic phosphate species with at least one oxide species, which can be carried out prior to the addition of the aggregate or filler material phase. The latter component(s) may be inert, as in the case of fused grain or tabular $Al_2O_3$, or highly sintered (>1650°C) $MgAl_2O_4$, or may have some degree of reactivity, as in the case of $MgAl_2O_4$ sintered to <1650°C or calcined $Al_2O_3$. The degree of activity is due to changes in surface area, degree of crystalline perfection and/or population of surface hydroxyls available for reaction which result from the calcining and/or sintering treatments.

The preferred manner of preparing formulations of the present invention is to combine the reactive spinel, the inert fillers if used, and any other solid components, as a dry mix then adding the dry mix to the liquid component(s) Although reverse mixing may be employed it is easier and requires less energy intensive mixing to add the dry mix to the liquid.

EXAMPLE 1

Magnesium aluminum spinel produced by the method of U.S. 4,400,431 and calcined at 500°C in the amount of 55 g. is combined with 693 g. of such spinel calcined at 1500°C and 682 g. of fused alumina and mixed. This is slurried in a solution of 310 g. of $Al(H_2PO_4)_3$ in 730 g. of water to produce a sprayable coating which was applied to an alumino silicate fiber board, dried, then cured at 900°F (480°C). This coated board was tested in molten aluminum alloy service and showed no evidence of wetting or attack, while the metal bonded to the surface of an unsprayed board.

Adding 33 g. of fumed alumina to the above formulation improved sprayability significantly with no apparent loss in performance.

32,931-F                    -8-

EXAMPLE 2

A concentrate was prepared by slurrying 1260 g. of magnesium aluminum spinel which had been sintered at 1650° along with 430 g. each of sintered alumina and fused alumina in a solution of 253.8 g. $Al(H_2PO_4)_3$ and 34 grams $H_3PO_4$ in 334.8 g. of $H_2O$. Immediately prior to use, the concentrate was mixed with 1060 g. of a 10% aqueous solution of $Al(H_2PO_4)_3$.

The coating was sprayed onto a heated spinel/ aluminum phosphate bonded silicon carbide crucible and cured. This treatment sealed the surface and showed no evidence of corrosive attack in over thirty melts of non-ferrous metal alloys.

EXAMPLE 3

To prepare a mold wash to protect a steel mold to be used in casting magnesium, 4.65 kg. of magnesium aluminum spinel sintered at about 1650°C and 1.47 kg. of spinel calcined at 1000°C are suspended in a solution of 2.5 kg. of $Al(H_2PO_4)_3$ and 119 g. $H_3PO_4$ in 5.27 kg. of $H_2O$.

When this formulation was sprayed onto a clean steel mold used to cast magnesium parts, 36 castings were made with only a single minor repair required. At the end of this run, the coating was still in good condition. Other commercially available coatings tested required recoating every few castings.

EXAMPLE 4

While the coating produced in Example 3 is excellent, that formulation has a tendency to settle, and requires significant mixing immediately prior to use. To reduce this problem, 315 g. of fumed alumina were added.

This greatly reduced the settling, with no discernable degradation in the quality of the coating. When this coating was tested on mold for casting magnesium ingots it exhibited good release from the ingot and retention on the mold. Application was by spray gun with curing induced by the ingot mold preheaters.

EXAMPLE 5

To prepare a mold wash to protect a steel mold to be used in casting magnesium wheels 300 g. of magnesium aluminum spinel calcined at 1000°C was suspended in a solution of 437.5 g. of $Al(H_2PO_4)_3$ and 20.4 grams $H_3PO_4$ in 471 g. $H_2O$. This coating was sprayed on the mold and gave good release and resistance to abrasion.

EXAMPLE 6

A coating for a steel mold was prepared employing

| weight percent | component |
|---|---|
| 34.13 | 1600-1650° sintered $MgAl_2O_4$ |
| 10.59 | 1000° calcined $MgAl_2O_4$ |
| 1.06 | fumed $Al_2O_3$ |
| 9.81 | $Al(H_2PO_4)_3$ |
| 0.53 | $H_3PO_4$ |
| 43.90 | $H_2O$ |

The coating was tight and provided good mold release in magnesium molding service.

0178155

- 11 -

<u>CLAIMS</u>

1.  A coating composition comprising

(a)    15 to 64 per cent by weight of a $MgAl_2O_4$ spinel, calcined to a temperature between about 500°C and 1650°C;

(b)    8 to 42 per cent by weight of an acidic phosphate material capable of decomposition on heating to provide $(PO_3)_n^-$ moieties;

(c)    water in an amount to give flowability to the composition.

2.   A composition as claimed in claim 1, wherein the amount of water is from 28 to 52 per cent by weight of the composition.

3.   A composition as claimed in claim 1 or claim 2, which also comprises a substantially non-reactive filler, in an amount of up to 30 per cent by weight of the composition.

4.   A composition as claimed in any one of the preceding claims, which also comprises a modifier, in an amount of up to 5 per cent by weight of the composition.

5.   A composition as claimed in any of claims 1 to 4 which comprises a mixture of a 1500°C calcined $MgAl_2O_4$ and a 500°C calcined $MgAl_2O_4$.

6.   The composition as claimed in any one of claims 1 to 4 which comprises a mixture of a 1650°C calcined

$MgAl_2O_4$ and a 1000°C calcined $MgAl_2O_4$.

7.   A composition as claimed in claim 5 where the composition comprises about 28 per cent by weight of 1500°C calcined $MgAl_2O_4$, and about 2 per cent weight of 500°C calcined $MgAl_2O_4$.

8.   A composition as claimed in any one of claims 1 to 4 which comprises about 33 per cent by weight of 1650°C calcined $MgAl_2O_4$.

9.   A composition as claimed in claim 6 which comprises about 33 per cent by weight of 1650°C calcined $MgAl_2O_4$, and about 10 per cent by weight of 1000°C calcined $MgAl_2O_4$.

10.   A composition as claimed in any one of claims 1 to 4 which comprises in about 24 per cent by weight of 1000°C calcined $MgAl_2O_4$.

11.   An article provided with a cured coating of a composition as claimed in any one of the preceding claims.